# EUROPÄISCHE PATENTANMELDUNG

(11) **EP 4 508 973 A1**
(43) Veröffentlichungstag der Anmeldung: **19.02.2025**
(21) Anmeldenummer: 24183362.3
(22) Anmeldetag: 20.06.2024
(51) Int. Cl.: A01F 15/08, A01D 75/18, G05B 23/02

(54) **VERFAHREN ZUM BESTIMMEN EINES VERSCHLEISSZUSTANDS EINER LANDWIRTSCHAFTLICHEN BALLENPRESSE**

(30) Priorität: 15.08.2023 DE 102023121771
(71) Anmelder: Usines CLAAS France S.A.S, 57140 St. Rémy / Woippy (FR)
(72) Erfinder: Fuchs, Volker, 54439 Saarburg (DE); Batancourt, Grégory, 57130 Vionville (FR); Bistritz, Philipp, 78224 Singen (DE); Bonhomme, Thierry, 57730 Macheren (FR); Dommange, Pierre, 57160 Scy-Chazelles (FR); Fischer, Josef, 88400 Biberach (DE); Henselmeyer, Hendrik, 49214 Bad Rothenfelde (DE); Obellianne, Steve, 57530 Courcelles-Chaussy (FR); Risse, Nicolas, 57645 Retonfey (FR); Rongvaux, Laurent, 54800 Tronville (FR); Wieckhorst, Jan Carsten, 29525 Uelzen Orsteil Hanstedt 2 (DE)
(74) Vertreter: CLAAS 365FarmNet GmbH

(57) **Zusammenfassung**

Die vorliegende Erfindung betrifft ein Verfahren zum Bestimmen eines Verschleißzustands mindestens eines Arbeitsaggregats (5) einer landwirtschaftlichen Ballenpresse (4), die dazu ausgebildet ist, an eine landwirtschaftliche Zugmaschine (3) zur Bildung eines landwirtschaftlichen Gespanns (1) adaptiert zu werden. Mittels mindestens einer Sensoreinrichtung (7) werden Betriebsdaten der landwirtschaftlichen Ballenpresse (4) zu einer Vielzahl an Zeitpunkten vor, während und/oder nach einer Durchführung eines Arbeitsauftrags auf einer landwirtschaftlichen Fläche (2) mittels der landwirtschaftlichen Ballenpresse (4) ermittelt. Das Verfahren ist dadurch gekennzeichnet, dass die ermittelten Betriebsdaten an eine Datenbank (9) übermittelt und die ermittelten Betriebsdaten in der Datenbank (9) hinterlegt werden. Mittels einer Verarbeitungseinrichtung (11) wird der Verschleißzustand des mindestens einen Arbeitsaggregats (5) der landwirtschaftlichen Ballenpresse (4) für jeden Zeitpunkt der Vielzahl an Zeitpunkten durch ein Verarbeiten der ermittelten Betriebsdaten in einer Analyseroutine bestimmt, wobei die Verarbeitungseinrichtung (11) mit der Datenbank (9) zur Übertragung von Daten kommuniziert.

## Beschreibung

Die vorliegende Anmeldung betrifft ein Verfahren zum Bestimmen eines Verschleißzustands mindestens eines Arbeitsaggregats einer landwirtschaftlichen Ballenpresse gemäß dem Oberbegriff des unabhängigen Patentanspruchs 1, eine landwirtschaftliche Ballenpresse zur Verwendung in einem solchen Verfahren gemäß dem unabhängigen Patentanspruch 15 sowie ein landwirtschaftliches Gespann bestehend aus einer landwirtschaftlichen Zugmaschine und einer solchen landwirtschaftlichen Ballenpresse gemäß dem unabhängigen Patentanspruch 16.

In der modernen Landwirtschaft werden stets Bestrebungen dahingehend unternommen die Produktivität und Wirtschaftlichkeit von Ernteprozessen bzw. einer gesamten Ernteprozesskette zu erhöhen. Hierfür ist es unerlässlich den entsprechenden Arbeitsauftrag während einer nur sehr kurzen Erntesaison mit einer hohen Effizienz durchzuführen. Neben dem nur kurzen Zeitfenster zur Durchführung der Ernteprozesse lastet ein zusätzlicher Druck auf den Landwirten und Lohnunternehmern durch die sich stetig und oftmals kurzfristig wandelnden ökologischen und ökonomischen Randbedingungen. Weiterhin ist es wesentlich, dass die Arbeitsaggregate der Erntemaschinen während der Durchführung des Arbeitsauftrags stets intakt sind, um sicherzustellen, dass verschleißbedingte Defekte von Arbeitsaggregaten und somit Ausfälle der Erntemaschine gänzlich verhindert, zumindest jedoch weitestgehend vermieden werden.

Aus der DE 10 2017 103 537 A1 ist in diesem Zusammenhang beispielsweise bekannt einen Verschleißzustand eines Häckselwerks eines zur Verarbeitung eines Gutstroms vorgesehenen Feldhäckslers zu erfassen.

Demnach ist es grundsätzlich bekannt, den Verschleißzustand von Arbeitsaggregaten einer Erntemaschine zu erfassen. Basierend hierauf kann dann beispielsweise im Falle eines Feldhäckslers die Schneidkantengeometrie eines verschlissenen Häckselmessers einer Messertrommel eines Häckselwerks durch ein Nachschleifen des Häckselmessers wiederhergestellt werden.

Damit eine hohe Produktivität und Wirtschaftlichkeit erzielt werden können, ist es erforderlich neben einer effizienten Durchführung der Arbeitsaufträge auch vor- und nachgelagerte mit dem Arbeits- bzw. Ernteauftrag verbundene Arbeiten effizient durchzuführen. Der Verschleiß von Arbeitsaggregaten kann dabei nicht nur in einem Defekt bzw. Ausfall des Arbeitsaggregats bzw. der Erntemaschine resultieren, sondern auch für die Abrechnungen von Arbeitsaufträgen, die Planung einer Erntestrategie und/oder die Wartung der Arbeitsaggregate bzw. der Erntemaschine relevant sein bzw. werden. Weiterhin hat der Verschleiß der Arbeitsaggregate einen wesentlichen Einfluss auf das Ergebnis des Arbeitsauftrags. Verschlissene Arbeitsaggregate haben zur Folge, dass das Arbeitsergebnis der Erntemaschine nicht dem Soll entspricht.

Zwar ist die Bestimmung eines Verschleißzustands eines Arbeitsaggregats grundsätzlich bekannt, allerdings besteht keine Möglichkeit den bestimmten Verschleißzustand oder zeitlichen Verschleißverlauf in Bezug zu einer landwirtschaftlichen Fläche sowie einem auf der landwirtschaftlichen Fläche durchgeführten Arbeitsauftrag zu setzen.

Insbesondere eine landwirtschaftliche Ballenpresse umfasst eine Vielzahl von Arbeitsaggregaten, die während der Durchführung des Arbeitsauftrags hohen Belastungen ausgesetzt sind und deren Zustand einen erheblichen Einfluss auf die Qualität des zu Ballen verarbeiteten Ernteguts haben. Das Erkennen von Verschleißzuständen, die zu einem baldigen Defekt führen, ist dabei oftmals anhand einer optischen Prüfung nur schwer möglich und aufgrund der Vielzahl an Arbeitsaggregate sehr zeitintensiv. Oftmals werden Arbeitsaggregate daher entweder nicht ausreichend oft gewartet oder aber zu oft gewartet oder ausgetauscht, obwohl deren Zustand durchaus noch akzeptabel ist und eine Weiterarbeit zulassen würde. Diese Betriebsweise geht mit einem hohen zeitlichen Aufwand und hohen Kosten einher und ist daher im Hinblick auf die Zielsetzung hohe Produktivität und hohe Wirtschaftlichkeit nicht ideal.

Ausgehend hiervon ist es demnach die Aufgabe der vorliegenden Erfindung, ein Verfahren anzugeben, mittels dem Verschleißzustände von Arbeitsaggregaten einer landwirtschaftlichen Ballenpresse präziser erfasst und bewertet sowie mit einem Arbeitsauftrag und/oder einer landwirtschaftlichen Fläche, auf welcher der Arbeitsauftrag durchgeführt wurde, korreliert werden können, um eine hocheffiziente und betriebssichere Durchführung des Arbeitsauftrags zu gewährleisten.

Diese Aufgabe wird erfindungsgemäß durch die Merkmale des unabhängigen Patentanspruchs 1 gelöst, wobei vorteilhafte Weiterbildungen des erfindungsgemäßen Verfahrens Gegenstand der entsprechenden abhängigen Patentansprüche 2 bis 14 sind.

Demnach betrifft die vorliegende Erfindung ein Verfahren zum Bestimmen eines Verschleißzustands mindestens eines Arbeitsaggregats einer landwirtschaftlichen Ballenpresse, die dazu ausgebildet ist, an eine landwirtschaftliche Zugmaschine zur Bildung eines landwirtschaftlichen Gespanns adaptiert zu werden. Mittels mindestens einer Sensoreinrichtung werden Betriebsdaten der landwirtschaftlichen Ballenpresse zu einer Vielzahl an Zeitpunkten vor, während und/oder nach einer Durchführung eines Arbeitsauftrags auf einer landwirtschaftlichen Fläche mittels der landwirtschaftlichen Ballenpresse ermittelt. Das Verfahren ist dadurch gekennzeichnet, dass die ermittelten Betriebsdaten an eine Datenbank übermittelt werden, wobei die Datenbank mit der Sensoreinrichtung zur Übertragung von Daten kommuniziert und die ermittelten Betriebsdaten in der Datenbank hinterlegt werden. Mittels einer Verarbeitungseinrichtung wird der Verschleißzustand des mindestens einen Arbeitsaggregats der landwirtschaftlichen Ballenpresse für jeden Zeitpunkt der Vielzahl an Zeitpunkten durch ein Verarbeiten der ermittelten Betriebsdaten in einer Analyseroutine bestimmt, wobei die Verarbeitungseinrichtung mit der Datenbank zur Übertragung von Daten kommuniziert.

Durch das erfindungsgemäße Verfahren wird es überhaupt erst möglich den Verschleißzustand von Arbeitsaggregaten einer landwirtschaftlichen Ballenpresse präzise zu bestimmen, um somit einem Defekt der Arbeitsaggregate und einem hierdurch verursachten Ausfall der landwirtschaftlichen Ballenpresse entgegenzuwirken. Weiterhin können durch die Bestimmung des Verschleißzustands des mindestens einen Arbeitsaggregats zu verschiedenen Zeitpunkten die Entwicklung des Verschleißzustands kontinuierlich verfolgt, hieraus eine durch die Durchführung eines Arbeitsauftrags auf einer landwirtschaftlichen Fläche auf das Arbeitsaggregat wirkende Belastung ermittelt, diese bewertet und entsprechend Schlüsse hinsichtlich des Betriebs der landwirtschaftlichen Ballenpresse gezogen werden. Mit anderen Worten, der Verschleißzustand mindestens eines Arbeitsaggregats der landwirtschaftlichen Ballenpresse wird in Bezug zum Arbeitsauftrag und zur landwirtschaftlichen Fläche, auf welcher der Arbeitsauftrag von der landwirtschaftlichen Ballenpresse ausgeführt wird, gesetzt.

In der Analyseroutine, die der Bestimmung des Verschleißzustands des Arbeitsaggregats dient, wird ein Analysealgorithmus angewendet, der aus den ermittelten Daten den exakt zu dem Zeitpunkt, für den die Daten ermittelt wurden, vorliegenden Verschleißzustand des Arbeitsaggregats bestimmt. Neben klassischen Analysealgorithmen, beispielsweise einer Fast-Fourier-Transformation, kann der in der Analyseroutine angewendete Analysealgorithmus auch ein lernfähiger Analysealgorithmus, also ein Analysealgorithmus, der auf einer künstlichen Intelligenz, vorzugsweise einem künstlichen neuronalen Netz, basiert. Der lernfähige Analysealgorithmus wird vor der Durchführung einer ersten Bestimmung eines ortsreferenzierten Verschleißzustands mittels eines Initialdatensatzes, der mittels manueller Annotation vorgenommene Zuordnungen von verschiedenen Betriebsparametern von Arbeitsaggregaten und entsprechenden Verschleißzuständen der Arbeitsaggregate definiert, trainiert. Die während der Durchführung des erfindungsgemäßen Verfahrens ermittelten Daten und bestimmten Verschleißzustände können zum weiteren Trainieren des Analysealgorithmus verwendet werden.

Das erfindungsgemäße Verfahren erlaubt demnach eine äußerst präzise und zuverlässige Bestimmung von Verschleißzuständen der Arbeitsaggregate einer landwirtschaftlichen Ballenpresse, wodurch betriebskritische Situationen verhindert werden können, die im schlimmsten Fall zu einem Defekt eines Arbeitsaggregats und somit zu einem Ausfall der landwirtschaftlichen Ballenpresse bzw. des landwirtschaftlichen Gespanns und demnach letztendlich zu einer Senkung von Produktivität und Wirtschaftlichkeit führen könnten.

Dabei ist das Verfahren nicht nur auf die Bestimmung des Verschleißzustands eines Arbeitsaggregats der landwirtschaftlichen Ballenpresse beschränkt. Vielmehr können, mittels einer oder mehrerer Sensoreinrichtungen, gleichzeitig Betriebsdaten einer Vielzahl an Arbeitsaggregaten der Ballenpresse zu der Vielzahl an Zeitpunkten vor, während und/oder nach der Durchführung des Arbeitsauftrags bestimmt werden, wobei, mittels der Verarbeitungseinrichtung, gleichzeitig der Verschleißzustand der Vielzahl an Arbeitsaggregaten bestimmt wird. Hierdurch kann neben den Verschleißzuständen der einzelnen Arbeitsaggregate der landwirtschaftlichen Ballenpresse auch ein Gesamtverschleißzustand der landwirtschaftlichen Ballenpresse bestimmt werden.

Als Sensoreinrichtungen kommen sämtliche im Kontext von landwirtschaftlichen Arbeits- und/oder Erntemaschinen bekannte berührungslos und berührend arbeitende Sensoren in Frage, die der Ermittlung von Betriebsparametern dienen.

Die für die Bestimmung des Verschleißzustands des Arbeitsaggregats erforderlichen Verfahrensschritte werden vorzugsweise automatisch abgearbeitet, sobald das Verfahren initiiert wird.

Gemäß einer vorteilhaften Weiterbildung der Erfindung ist vorgesehen, dass, mittels der Verarbeitungseinrichtung, mindestens eine Anweisung zur Durchführung des Arbeitsauftrags mittels der landwirtschaftlichen Ballenpresse erzeugt wird, und zwar in Abhängigkeit des bestimmten Verschleißzustands des mindestens einen Arbeitsaggregats der landwirtschaftlichen Ballenpresse.

Die Erzeugung einer Anweisung zur Durchführung des Arbeitsauftrags sorgt dafür, dass abhängig vom bestimmten Verschleißzustand des Arbeitsaggregats entsprechend reagiert werden kann, also der Betrieb der Ballenpresse hinsichtlich des tatsächlich vorherrschenden Verschleißzustands der Ballenpresse angepasst werden kann.

Gemäß einer vorteilhaften Weiterbildung der Erfindung ist vorgesehen, dass die Anweisung zur Durchführung des Arbeitsschrittes eine Vorschrift umfasst, die eine Ansteuerung der landwirtschaftlichen Ballenpresse und/oder der landwirtschaftlichen Zugmaschine zur Durchführung des Arbeitsauftrags definiert.

Ergänzend oder alternativ hierzu ist es vorgesehen, dass die Anweisung zur Durchführung des Arbeitsauftrags eine Vorschrift umfasst, die das Beauftragen einer für eine Wartung der landwirtschaftlichen Ballenpresse zuständigen Person zur Wartung des mindestens einen Arbeitsaggregats der landwirtschaftlichen Ballenpresse umfasst.

Weiter ergänzend oder alternativ hierzu ist es vorgesehen, dass die Anweisung zur Durchführung des Arbeitsauftrags eine Vorschrift umfasst, die eine geänderte Route für das landwirtschaftliche Gespann zur Anfahrt eines Ortes definiert, an dem die für die Wartung der landwirtschaftlichen Ballenpresse zuständige Person die Wartung des mindestens einen Arbeitsaggregats der landwirtschaftlichen Ballenpresse durchführt.

In Abhängigkeit des zuvor bestimmten Verschleißzustands des/der Arbeitsaggregate der landwirtschaftlichen Ballenpresse wird eine Anweisung von der Verarbeitungseinrichtung erzeugt, die entsprechende Vorschriften zur Ansteuerung der landwirtschaftlichen Ballenpresse umfasst, die dem entsprechenden zuvor bestimmten Verschleißzustand Rechnung tragen. Wird durch die Verarbeitungseinrichtung ein unkritischer Verschleißzustand bestimmt, also ein Verschleißzustand, der nicht zu einer betriebskritischen Situation führen würde, ist in der Anweisung beispielsweise die Vorschrift enthalten, dass ein Betrieb bzw. eine Ansteuerung der landwirtschaftlichen Ballenpresse ohne Einschränkungen, also wie geplant, erfolgen kann. Wird hingegen ein kritischer Verschleißzustand bestimmt, also ein Verschleißzustand, der zu einer betriebskritischen Situation führen würde, ist in der Anweisung beispielsweise die Vorschrift enthalten, dass ein Betrieb bzw. eine Ansteuerung der landwirtschaftlichen Ballenpresse nur mit Einschränkungen oder überhaupt nicht mehr erfolgen kann. Ergänzend oder alternativ hierzu kann in einem solchen Fall weiter eine Vorschrift enthalten sein, die besagt, dass eine Wartung des Arbeitsaggregats erforderlich ist und eine Person zur Wartung beauftragt werden muss und/oder das landwirtschaftliche Gespann an einen speziellen Ort zur Wartung befördert werden muss.

Gemäß einer vorteilhaften Weiterbildung der Erfindung ist vorgesehen, dass die mindestens eine erzeugte Anweisung mittels der Verarbeitungseinrichtung automatisch ausgeführt wird.

Ergänzend oder alternativ hierzu ist vorgesehen, dass die mindestens eine erzeugte Anweisung von einem Nutzer der landwirtschaftlichen Ballenpresse ausgeführt wird.

Die Möglichkeit einer automatischen Ausführung der Anweisung oder einer Ausführung der Anweisung unter Einbeziehung des Nutzers sorgt dafür, dass je nach Erfahrungslevel des Nutzers eine geeignete Betriebsweise der Ballenpresse möglich ist.

Gemäß einer vorteilhaften Weiterbildung der Erfindung ist vorgesehen, dass, mittels der Verarbeitungseinrichtung, in Abhängigkeit des bestimmten Verschleißzustands des mindestens einen Arbeitsaggregats der landwirtschaftlichen Ballenpresse bei der Durchführung des Arbeitsauftrags verschleißbedingt verursachte Kosten, eine Verschleißursache, eine zukünftige Erntestrategie für die landwirtschaftliche Fläche und/oder ein Wartungsintervall des mindestens einen Arbeitsaggregats der landwirtschaftlichen Ballenpresse bestimmt werden.

Hierdurch werden Daten generiert, die für die vor- und nachgelagerten Prozessschritte des mittels der landwirtschaftlichen Ballenpresse durchzuführenden bzw. durchgeführten Arbeitsauftrags von erheblicher Relevanz sind, Einfluss auf zukünftige Prozesse auf der landwirtschaftlichen Fläche haben, unmittelbar vom Verschleiß des Arbeitsaggregats abhängen, und sonst nicht hinreichend oder gar nicht durch eine Person zu ermitteln sind. Eine effiziente und transparente Durchführung von dem eigentlichen Arbeitsauftrag, der durch die landwirtschaftliche Ballenpresse auf der landwirtschaftlichen Fläche durchgeführt wird, vor- und nachgelagerten Prozessschritte, insbesondere solche welche die Dokumentation des Arbeitsauftrags betreffen, wird hierdurch ermöglicht.

Gemäß einer vorteilhaften Weiterbildung der Erfindung ist vorgesehen, dass, mittels der Verarbeitungseinrichtung, anhand eines zu einem Zeitpunkt unmittelbar vor der Durchführung des Arbeitsauftrags bestimmten Verschleißzustands des mindestens einen Arbeitsaggregats der landwirtschaftlichen Ballenpresse und eines zu einem Zeitpunkt unmittelbar nach der Durchführung des Arbeitsauftrags bestimmten Verschleißzustands des mindestens einen Arbeitsaggregats der landwirtschaftlichen Ballenpresse eine Verschleißkennzahl für das mindestens eine Arbeitsaggregat der landwirtschaftlichen Ballenpresse bestimmt wird.

Vorzugsweise ist vorgesehen, dass anhand der Verschleißkennzahl die bei der Durchführung des Arbeitsauftrags verschleißbedingt verursachten Kosten bestimmt werden.

Ergänzend oder alternativ hierzu ist es vorgesehen, dass anhand der Verschleißkennzahl das Wartungsintervall für das mindestens eine Arbeitsaggregat der landwirtschaftlichen Ballenpresse bestimmt wird.

Die Bestimmung einer Verschleißkennzahl, welche den während eines durchgeführten Arbeitsauftrags entstandenen Verschleiß an dem Arbeitsaggregat der landwirtschaftlichen Ballenpresse repräsentiert, hat eine Vielzahl an Vorteilen. Zum einen wird für eine Person, beispielsweise einen Landwirt oder einen Lohnunternehmer, dem die landwirtschaftliche Ballenpresse und/oder die landwirtschaftliche Fläche, auf der der Arbeitsauftrag durch die landwirtschaftliche Ballenpresse durchgeführt wurde, gehört bzw. betreibt, unmittelbar ersichtlich zu welchem Verschleiß die Durchführung des Arbeitsauftrags an einem Arbeitsaggregat geführt hat, wodurch unmittelbar ersichtlich wird, welche Kosten aufgrund von Verschleiß an dem Arbeitsaggregaten bei der Durchführung des Arbeitsauftrags entstanden sind. Diese Kosten können dann in die Berechnung der gesamten Betriebskosten einfließen.

Das Bestimmen einer Verschleißkennzahl ist weiterhin für die Bestimmung von Wartungsintervallen von Vorteil, so dass die Arbeitsaggregate bzw. die vor der Durchführung eines nachfolgenden Arbeitsauftrags stets in einem hinreichend gewarteten Zustand vorliegt. Hierdurch werden Ausfallzeiten der landwirtschaftlichen Ballenpresse erheblich reduziert, da die Wartung von Arbeitsaggregaten insbesondere zu Zeiten stattfinden kann, an denen die landwirtschaftliche Ballenpresse nicht in Betrieb ist.

Gemäß einer vorteilhaften Weiterbildung der Erfindung ist vorgesehen, dass die Bestimmung des Verschleißzustands des mindestens einen Arbeitsaggregats der landwirtschaftlichen Ballenpresse unter Berücksichtigung von Referenzdaten erfolgt.

Vorzugsweise ist vorgesehen, dass die Referenzdaten in der Datenbank hinterlegte Kennfelddaten des mindestens einen Arbeitsaggregats der landwirtschaftlichen Ballenpresse und/oder der landwirtschaftlichen Ballenpresse, historische Daten zu Verschleißzuständen des mindestens einen Arbeitsaggregats der landwirtschaftlichen Ballenpresse, Geometriedaten des mindestens einen Arbeitsaggregats der landwirtschaftlichen Ballenpresse und/oder der landwirtschaftlichen Ballenpresse, Lastkollektive des mindestens einen Arbeitsaggregats der landwirtschaftlichen Ballenpresse und/oder der landwirtschaftlichen Ballenpresse, Wetterdaten und/oder agronomische Daten der landwirtschaftlichen Fläche, insbesondere Bodendaten, Bestandsdaten, Ertragsdaten und/oder Flächendaten, umfassen.

Die Verwendung von Referenzdaten als weitere Eingangsgröße in der Analyseroutine sorgt für eine erhebliche Steigerung der Genauigkeit bei der Bestimmung des Verschleißzustands des mindestens einen Arbeitsaggregats der landwirtschaftlichen Ballenpresse.

Gemäß einer vorteilhaften Weiterbildung der Erfindung ist vorgesehen, dass, mittels einer Positionsbestimmungseinrichtung, Positionsdaten der landwirtschaftlichen Ballenpresse auf der landwirtschaftlichen Fläche zu der Vielzahl an Zeitpunkten vor, während und/oder nach der Durchführung des Arbeitsauftrags ermittelt werden, wobei die Positionsdaten an die Datenbank, die mit der Positionsbestimmungseinrichtung zur Übertragung von Daten kommuniziert, übermittelt werden, wobei die Betriebsdaten und die Positionsdaten einander zugeordnet in der Datenbank hinterlegt werden, wobei, mittels der Verarbeitungseinrichtung, ein ortsreferenzierter Verschleißzustand des mindestens einen Arbeitsaggregats der landwirtschaftlichen Ballenpresse für jeden Zeitpunkt der Vielzahl an Zeitpunkten durch ein Verarbeiten der in der Datenbank hinterlegten Betriebsdaten und Positionsdaten in einer Analyseroutine bestimmt wird.

Das erfindungsgemäße Verfahren erlaubt demnach weiterhin die Zuordnung dieser Verschleißzustände zu einem Ort- bzw. einer Position der landwirtschaftlichen Ballenpresse, an dem/der sich die landwirtschaftliche Ballenpresse zu den verschiedenen Zeitpunkten auf der landwirtschaftlichen Fläche befunden hat. Mit anderen Worten, es werden Verschleißzustände des Arbeitsaggregats zu verschiedenen Zeitpunkten mit einem eindeutigen Bezug zu einer Position der landwirtschaftlichen Ballenpresse auf der landwirtschaftlichen Fläche zu diesen verschiedenen Zeitpunkten erhalten. Hierdurch wird es möglich den Ernteprozess, der den Arbeitsauftrag auf der landwirtschaftlichen Fläche sowie dem Arbeitsauftrag vor- und nachgelagerte Prozessschritte umfasst, den Betrieb der landwirtschaftlichen Ballenpresse an und für sich sowie die Planung zukünftiger Ernteprozesse effizienter und transparenter zu gestalten.

Gemäß einer vorteilhaften Weiterbildung der Erfindung ist vorgesehen, dass, mittels einer mit der Verarbeitungseinrichtung zur Übertragung von Daten kommunizierenden Anzeigeeinrichtung, der Verschleißzustand des mindestens einen Arbeitsaggregats der landwirtschaftlichen Ballenpresse, die bei der Durchführung des Arbeitsauftrags verschleißbedingt verursachten Kosten, die Verschleißursache, die zukünftige Erntestrategie für die landwirtschaftliche Fläche und/oder das Wartungsintervall des mindestens einen Arbeitsaggregats der landwirtschaftlichen Ballenpresse angezeigt wird.

Gemäß einer vorteilhaften Weiterbildung der Erfindung ist vorgesehen, dass, mittels der Anzeigeeinrichtung, der ortsreferenzierte Verschleißzustand des mindestens einen Arbeitsaggregats der landwirtschaftlichen Ballenpresse kartiert angezeigt wird.

Hierdurch werden einer Person die unmittelbar aus dem Verschleißzustand resultierenden Informationen zugänglich gemacht, wodurch die Person in die Lage versetzt wird entsprechend des ihr/ihm dargestellten Informationsgehalt Entscheidungen und/oder Handlungen betreffend die landwirtschaftliche Ballenpresse selbst und/oder den Arbeitsauftrag vorzunehmen. Die Darstellung kann dabei wahlweise textbasiert, akustisch und/oder grafisch erfolgen.

Gemäß einer vorteilhaften Weiterbildung der Erfindung ist vorgesehen, dass die Datenbank, die Verarbeitungseinrichtung und/oder die Anzeigeeinrichtung ein Verwaltungssystem ausbilden.

Vorzugsweise ist vorgesehen, dass das Verwaltungssystem einer Entität zugeordnet ist, die unabhängig von einer Person ist, welcher die landwirtschaftliche Ballenpresse, die landwirtschaftliche Zugmaschine und/oder die landwirtschaftliche Fläche, auf welcher der Arbeitsauftrag durchgeführt wird, zugeordnet ist, wobei eine Nutzung des Verwaltungssystems zur Durchführung der Verfahrensschritte von der Entität bei einer vorliegenden Berechtigung freigeschaltet wird.

Wahlweise kann das Verwaltungssystem demnach der Person, beispielsweise dem Landwirt oder dem Lohnunternehmer, welcher die landwirtschaftliche Ballenpresse, die landwirtschaftliche Zugmaschine und/oder die landwirtschaftliche Fläche, auf der der Arbeitsauftrag durchgeführt wird, besitzt oder betreibt oder einem Dienstleister (Entität) zugeordnet sein. Die Person, beispielsweise der Landwirt oder Lohnunternehmer, kann sich die Nutzung des Verwaltungssystems zur Durchführung des erfindungsgemäßen Verfahrens durch die Bezahlung einer Gebühr von dem Dienstleister freischalten lassen (d.h., als eine As-a-Service-Funktionalität).

Die erfindungsgemäße Aufgabe wird ferner durch eine landwirtschaftliche Ballenpresse gemäß dem unabhängigen Patentanspruch 15 gelöst.

Weiterhin wird die erfindungsgemäße Aufgabe durch ein landwirtschaftliches Gespann aus einer landwirtschaftlichen Zugmaschine, vorzugsweise einem Traktor, und einer an die landwirtschaftliche Zugmaschine adaptierten landwirtschaftlichen Ballenpresse gemäß dem unabhängigen Patentanspruch 16 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung eines erfindungsgemä-ßen landwirtschaftlichen Gespanns während der Durchführung eines Arbeitsauftrags, wobei das landwirtschaftliche Gespann aus einer Zugmaschine und einer erfindungsgemäßen landwirtschaftlichen Ballenpresse gebildet wird;
- FIG. 2: eine schematische und exemplarische Darstellung von Einrichtungen zur Durchführung des erfindungsgemäßen Verfahrens; und
- FIG. 3: eine schematische und exemplarische Darstellung einer erfindungsgemäßen Anzeigeeinrichtung zur Darstellung von bei der Durchführung des erfindungsgemäßen Verfahrens erhaltenen Informationen.

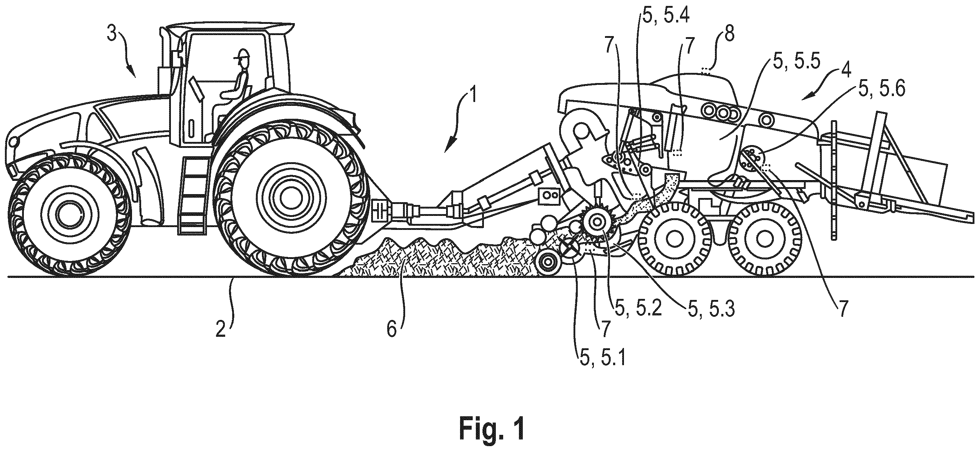

FIG. 1 zeigt eine schematische und exemplarische Darstellung eines erfindungsgemä-ßen landwirtschaftlichen Gespanns 1, welches einen Arbeitsauftrag bzw. Ernteauftrag auf einer landwirtschaftlichen Fläche 2 durchführt. Das landwirtschaftliche Gespann 1 wird durch eine landwirtschaftliche Zugmaschine 3, hier in Gestalt eines Traktors, und eine landwirtschaftliche Ballenpresse 3, hier in Gestalt einer Quaderballenpresse, gebildet, wobei die landwirtschaftliche Ballenpresse 4 an die landwirtschaftliche Zugmaschine 3 adaptiert ist. Die landwirtschaftliche Ballenpresse 4 umfasst verschiedene Arbeitsaggregate 5, die der Verarbeitung von auf der landwirtschaftlichen Fläche 2 in Form von Schwaden abgelegtem Erntegut 6 dienen. Die Arbeitsaggregate 5 der landwirtschaftlichen Ballenpresse 4 sind beispielsweise eine Pick-up 5.1, ein Rotor 5.2, Schneidmesser 5.3, ein Raffer 5.4, eine Presskammer 5.5 mit einem Pressmittel und eine Bindeeinrichtung 5.6, wobei je nach Ausgestaltung der landwirtschaftlichen Ballenpresse 4, beispielsweise wie dargestellt als Quaderballenpresse oder aber als Rundballenpresse, diese Arbeitsaggregate 5 verschieden ausgestaltet sein können, nicht alle dieser Arbeitsaggregate 5 vorhanden sind oder aber weitere Arbeitsaggregate 5 vorhanden sind.

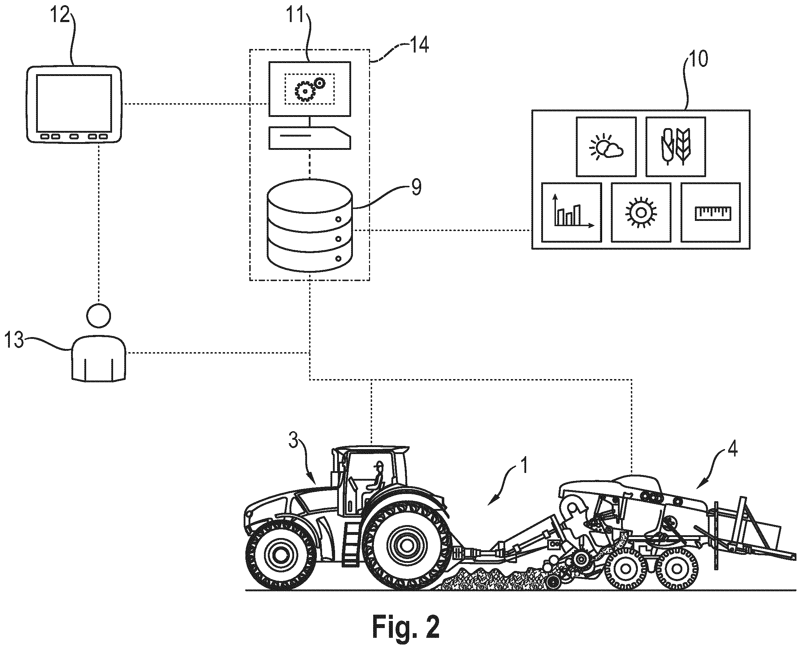

Die erfindungsgemäße landwirtschaftliche Ballenpresse 4 umfasst weiterhin mindestens eine Sensoreinrichtung 7 sowie optional eine Positionsbestimmungseinrichtung 8, wie in FIG. 2 dargestellt. Die Sensoreinrichtung 7 und, sofern vorhanden, auch die Positionsbestimmungseinrichtung 8 sind jeweils mit einer Datenbank 9 verbunden bzw. kommunizieren mit der Datenbank 9 zur Übertragung von Daten, so dass die von der Sensoreinrichtung 7 und der Positionsbestimmungseinrichtung 8 ermittelten Daten an die Datenbank 9 übermittelt und in dieser hinterlegt werden können. In der Datenbank 9 können neben den Daten der Sensoreinrichtung 7 und der Positionsbestimmungseinrichtung 8 optional auch noch sogenannte Referenzdaten 10 hinterlegt sein bzw. werden. Die Datenbank 9 ist weiterhin mit einer Verarbeitungseinrichtung 11 verbunden bzw. kommuniziert mit der Verarbeitungseinrichtung 11 zur Übertragung von Daten. Mit der Verarbeitungseinrichtung 11 kann wiederum eine Anzeigeeinrichtung 12 verbunden sein bzw. die Verarbeitungseinrichtung 11 kann mit der Anzeigeeinrichtung 12 zur Übertragung von Daten kommunizieren. Die Kommunikation der verschiedenen Einrichtungen 7, 8, 9, 11, 12 miteinander zur Übertragung von Daten kann wahlweise kabelgebunden und/oder drahtlos erfolgen.

Wie bereits eingangs angedeutet ist es für einen Nutzer 13 oftmals nur unzureichend oder gar nicht möglich kritische Verschleißzustände der Arbeitsaggregate 5 der landwirtschaftlichen Ballenpresse 4, die zu einer betriebskritischen Situation führen könnten, optisch, haptisch und/oder akustisch wahrzunehmen und basierend hierauf eine Entscheidung bzgl. der Ansteuerung und/oder Wartung der landwirtschaftlichen Ballenpresse 4 zu treffen. Demnach ist es notwendig, ein Verfahren zu implementieren, welches die zuverlässige Bestimmung von Verschleißzuständen von Arbeitsaggregaten 5 der landwirtschaftlichen Ballenpresse 4 erlaubt und somit den Nutzer 13 unterstützt, die richtigen Entscheidungen hinsichtlich des Betriebs/der Wartung der landwirtschaftlichen Ballenpresse 4 zur richtigen Zeit zu treffen, um den Arbeitsauftrag möglichst produktiv und wirtschaftlich zu gestalten.

Erfindungsgemäß ist nun vorgesehen, dass zunächst mittels der Sensoreinrichtung 7 zu einer Vielzahl an Zeitpunkten vor, während und/oder nach der Durchführung des Arbeitsauftrags mittels der landwirtschaftlichen Ballenpresse 4, beispielsweise während der Ernte des Ernteguts 6 auf der landwirtschaftlichen Fläche 2 oder aber während sich die landwirtschaftliche Ballenpresse 4 auf einer Hofstätte befindet, Betriebsdaten der landwirtschaftlichen Ballenpresse 4 ermittelt werden. Die Sensoreinrichtung 7 kann sämtliche berührungslos und berührend arbeitende Sensoren umfassen, die der Ermittlung von Betriebsparametern dienen. Die Sensoreinrichtung 7 kann beispielswiese einen Drehmomentsensor, einen Lastsensor, einen Drucksensor, eine Kamera oder einen Beschleunigungssensor umfassen.

Diese Betriebsdaten werden von der Sensoreinrichtung 7 an die Datenbank 9 übermittelt. Die Übermittlung der Betriebsdaten an die Datenbank 9 kann unmittelbar nach deren Ermittlung mittels der Sensoreinrichtung 7, nach Ablauf gewisser festlegbarer Zeitintervalle oder aber nach Abschluss des Arbeitsauftrags erfolgen. Die ermittelten Daten werden nach ihrer Übermittlung an die Datenbank 9 in dieser hinterlegt. Zum Bestimmen des Verschleißzustands des Arbeitsaggregats 5 der landwirtschaftlichen Ballenpresse 4, zu dem von der Sensoreinrichtung 7 ermittelte Betriebsdaten vorliegen, greift die Verarbeitungseinrichtung 11 auf diese Betriebsdaten zu und verarbeitet diese. Demnach wird für jeden Zeitpunkt der Vielzahl an Zeitpunkten zu dem die Daten von der Sensoreinrichtung ermittelt wurden, durch die Verarbeitungseinrichtung 11 ein Verschleißzustand des entsprechenden Arbeitsaggregats 5 der landwirtschaftlichen Ballenpresse 4 bestimmt.

Das Bestimmen des Verschleißzustands des Arbeitsaggregats 5 der landwirtschaftlichen Ballenpresse 4 mittels der Verarbeitungseinrichtung 11 erfolgt dabei durch ein Verarbeiten der ermittelten Betriebsdaten in einer Analyseroutine. Die Verarbeitungseinrichtung 11 verarbeitet die Betriebsdaten dabei in einer Analyseroutine unter Anwendung eines Analysealgorithmus derart, dass anhand der Betriebsdaten des Arbeitsaggregats 5 und einem über den Analysealgorithmus definierten Zusammenhang zwischen Betriebsdaten und Verschleißzustand der vorherrschende Verschleißzustand des Arbeitsaggregats 5 der landwirtschaftlichen Ballenpresse 4 bestimmt wird. Der Verschleißzustand des Arbeitsaggregats 5 kann mittels der Verarbeitungseinrichtung 11 beispielsweise in % Verschleiß bestimmt werden, wobei 0 % Verschleiß keinen Verschleiß des Arbeitsaggregats 5 und 100 % Verschleiß das Erreichen der maximalen Lebensdauer des Arbeitsaggregats 5 definiert. Die Verarbeitungseinrichtung 11 ist ferner dazu ausgebildet, einen betriebskritischen Verschleißzustand des Arbeitsaggregats 5 zu detektieren, der beispielsweise ab einem Wert größer 60 % Verschleiß vorliegen könnte. Die Verarbeitungseinrichtung11 vergleicht hierzu den bestimmten Verschleißzustand des Arbeitsaggregats 5 mit einem hierfür definierten und in der Datenbank 9 hinterlegtem Grenzwert, der einen betriebskritischen Verschleißzustand definiert.

Der in der Analyseroutine durch die Verarbeitungseinrichtung 2 verwendete Analysealgorithmus kann ein klassischer Analysealgorithmus, beispielsweise eine Fast-Fourier-Transformation, oder ein lernfähiger Analysealgorithmus sein, also ein Analysealgorithmus, der auf einer künstlichen Intelligenz, vorzugsweise einem künstlichen neuronalen Netz, basiert. Sofern es sich um einen lernfähigen Analysealgorithmus handelt, kann dieser vor der Durchführung einer ersten Bestimmung eines Verschleißzustands mittels eines Initialdatensatzes, der mittels manueller Annotation vorgenommene Zuordnungen von Daten betreffend verschiedene Betriebsparameter der verschiedenen Arbeitsaggregate 5 der landwirtschaftlichen Ballenpresse 4 und entsprechenden Verschleißzuständen dieser Arbeitsaggregate 5 definiert, trainiert. Die während der Durchführung des Verfahrens ermittelten Betriebsdaten und bestimmten Verschleißzustände können zum weiteren Trainieren des Analysealgorithmus verwendet werden.

Ist der Verschleißzustand des Arbeitsaggregats 5 der landwirtschaftlichen Ballenpresse 4 durch die Verarbeitungseinrichtung 11 in der Analyseroutine bestimmt worden, kann von der Verarbeitungseinrichtung 11 eine Anweisung zur Durchführung des Arbeitsauftrags mittels der landwirtschaftlichen Ballenpresse 4 erzeugt werden. Eine Anweisung zeichnet sich dadurch aus, dass diese mindestens eine Vorschrift umfasst. Die Anweisung kann entweder von der Verarbeitungseinrichtung 11 automatisch und/oder durch den Nutzer 13 ausgeführt werden. Abhängig von dem bestimmten Verschleißzustand des Arbeitsaggregats 5 kann die Anweisung eine Vielzahl an Vorschriften umfassen. So kann die Anweisung eine Vorschrift umfassen, die eine Ansteuerung der landwirtschaftlichen Ballenpresse 4 und/oder der landwirtschaftlichen Zugmaschine 3 zur Durchführung des Arbeitsauftrags definiert. Ergänzend oder alternativ kann die Anweisung eine Vorschrift umfassen, die das Beauftragen einer für eine Wartung der landwirtschaftlichen Ballenpresse 4 zuständigen Person zur Wartung des mindestens einen Arbeitsaggregats 5 der landwirtschaftlichen Ballenpresse 4 umfasst. Auch kann die Anweisung eine Vorschrift umfassen, die eine geänderte Route für die das landwirtschaftliche Gespann 1 zur Anfahrt eines Ortes definiert, an dem die für die Wartung der landwirtschaftlichen Ballenpresse 4 zuständige Person die Wartung des mindestens einen Arbeitsaggregats 5 der landwirtschaftlichen Ballenpresse 4 durchführt.

Mittels der Verarbeitungseinrichtung 11 kann weiterhin in Abhängigkeit des bestimmten Verschleißzustands des Arbeitsaggregats 5 der landwirtschaftlichen Ballenpresse 4 die bei der Durchführung des Arbeitsauftrags verschleißbedingt verursachten Kosten, eine Ursache für den Verschleiß, eine zukünftige Erntestrategie für die landwirtschaftliche Fläche 2 und/oder ein Wartungsintervall des Arbeitsaggregats 5 der landwirtschaftlichen Ballenpresse 4 bestimmt werden. Die Informationen können mittels der Anzeigeeinrichtung 12 dem Nutzer 13 angezeigt bzw. dargestellt werden. Die Anzeige bzw. Darstellung dieser Informationen auf der Anzeigeeinrichtung 12 kann dabei wahlweise textbasiert, akustisch und/oder grafisch, insbesondere durch grafische Elemente und/oder durch farbliche Hervorhebung, erfolgen.

Weiterhin kann anhand der durch die Verarbeitungseinrichtung 11 durchgeführten Bestimmung eines Verschleißzustands des Arbeitsaggregats 5 der landwirtschaftlichen Ballenpresse 4 zu der Vielzahl an Zeitpunkten eine Verschleißkennzahl von der Verarbeitungseinrichtung 11 ermittelt werden. Hierzu wird ein zu einem Zeitpunkt unmittelbar vor der Durchführung des Arbeitsauftrags durch die der landwirtschaftlichen Ballenpresse 4 mittels der Verarbeitungseinrichtung 11 bestimmter Verschleißzustand des Arbeitsaggregats 5 mit einem zu einem Zeitpunkt unmittelbar nach der Durchführung des Arbeitsauftrags durch die der landwirtschaftlichen Ballenpresse 4 mittels der Verarbeitungseinrichtung 11 bestimmter Verschleißzustand des Arbeitsaggregats 5 verglichen und basierend auf diesem Vergleich die Verschleißkennzahl für das Arbeitsaggregat 5 mittels der Verarbeitungseinrichtung 11 bestimmt. Die Verschleißkennzahl repräsentiert den Verschleiß des Arbeitsaggregats 5 der landwirtschaftlichen Ballenpresse 4, der bei der Durchführung des Arbeitsauftrags mittels der landwirtschaftlichen Ballenpresse 4 auf der landwirtschaftlichen Fläche 2 entstanden ist. Die mittels der Verarbeitungseinrichtung 11 ermittelte Verschleißkennzahl kann ebenfalls in der Datenbank 9 hinterlegt werden.

Die von der Verarbeitungseinrichtung 11 bestimmte Verschleißkennzahl für das Arbeitsaggregat 5 der landwirtschaftlichen Ballenpresse 4 kann dazu herangezogen bzw. verarbeitet werden, die bei der Durchführung des Arbeitsauftrags durch die landwirtschaftliche Ballenpresse 4 verschleißbedingt verursachten Kosten zu bestimmen. So kann beispielsweise anhand der ortsreferenzierten Verschleißkennzahl ermittelt werden, welche Kosten verschleißbedingt bei der Durchführung des Arbeitsauftrags durch die landwirtschaftliche Ballenpresse 4 auf der landwirtschaftlichen Fläche 2 entstanden sind. Diese Kosten können der Ermittlung der für die Durchführung des Arbeitsauftrags durch die landwirtschaftliche Ballenpresse 4 entstandenen Betriebskosten zugrunde gelegt werden. Auch kann die von der Verarbeitungseinrichtung 11 bestimmte Verschleißkennzahl für das Arbeitsaggregat 5 dazu herangezogen bzw. verarbeitet werden, ein Wartungsintervall für das Arbeitsaggregat 5 zu bestimmen, wodurch die Wartung des Arbeitsaggregats 5 bzw. der landwirtschaftlichen Ballenpresse 4 auf effiziente Art und Weise geplant werden kann.

Mittels der Verarbeitungseinrichtung 11 kann nicht nur der Verschleißzustand eines einzigen Arbeitsaggregats 5 der landwirtschaftlichen Ballenpresse 4 bestimmt werden. Vielmehr kann zeitgleich der Verschleißzustand einer Vielzahl an Arbeitsaggregaten 5 der landwirtschaftlichen Ballenpresse 4 bestimmt werden. Hierzu werden mittels einer Vielzahl an Sensoreinrichtungen 7 der landwirtschaftlichen Ballenpresse 4 Betriebsdaten einer Vielzahl an Arbeitsaggregaten 5 der landwirtschaftlichen Ballenpresse 4 zu der Vielzahl an Zeitpunkten vor, während und/oder nach der Durchführung des Arbeitsauftrags mittels der landwirtschaftlichen Ballenpresse 4 bestimmt. Anhand dieser Vielzahl an Betriebsdaten wird mittels der Verarbeitungseinrichtung 11 ein Verschleißzustand jedes Arbeitsaggregats 5 der Vielzahl an Arbeitsaggregaten 5 zu dem entsprechenden Zeitpunkt bestimmt. Anhand der Verschleißzustände jedes Arbeitsaggregats 5 der Vielzahl an Arbeitsaggregaten 5 kann mittels der Verarbeitungseinrichtung 11 weiterhin ein Gesamtverschleißzustand der landwirtschaftlichen Ballenpresse 4 bestimmt werden.

Neben den von der Sensoreinrichtung 7 ermittelten Betriebsdaten und können weiterhin die zuvor erwähnten in der Datenbank 9 hinterlegten Referenzdaten 10 bei der Verarbeitung zur Bestimmung des Verschleißzustands als Eingangsgrößen verwendet werden. Als Referenzdaten 10 können Kennfelddaten des mindestens einen Arbeitsaggregats 5 der landwirtschaftlichen Ballenpresse 4 und/oder der landwirtschaftlichen Ballenpresse 4, historische Daten zu Verschleißzuständen des mindestens einen Arbeitsaggregats 5 der landwirtschaftlichen Ballenpresse 4, Geometriedaten des mindestens einen Arbeitsaggregats 5 der landwirtschaftlichen Ballenpresse 4 und/oder der landwirtschaftlichen Ballenpresse 4, Lastkollektive des mindestens einen Arbeitsaggregats 5 landwirtschaftlichen Ballenpresse 4 und/oder der landwirtschaftlichen Ballenpresse 4, Wetterdaten und/oder agronomische Daten der landwirtschaftlichen Fläche 2, insbesondere Bodendaten, Bestandsdaten, Ertragsdaten und/oder Flächendaten, dienen.

Sofern die Positionsbestimmungseinrichtung 8 vorgesehen ist, können zusätzlich Daten der Positionsbestimmungseinrichtung 8 genutzt werden. Mittels der Positionsbestimmungseinrichtung 8 können ebenfalls zu der Vielzahl an Zeitpunkten vor, während und/oder nach der Durchführung des Arbeitsauftrags auf der landwirtschaftlichen Fläche 2 mittels der landwirtschaftlichen Ballenpresse 4 Positionsdaten der landwirtschaftlichen Ballenpresse 4 ermittelt werden. Diese Positionsdaten werden von der Positionsbestimmungseinrichtung 8 an die Datenbank 9 übermittelt. Sowohl die Betriebsdaten als auch die Positionsdaten für jeden Zeitpunkt der Vielzahl an Zeitpunkten werden nach ihrer Übermittlung an die Datenbank 9 in dieser hinterlegt. Die Betriebsdaten und Positionsdaten werden dabei einander zugeordnet in der Datenbank 9 hinterlegt. Die Zuordnung von Betriebsdaten und Positionsdaten kann dadurch erfolgen, dass jeder Datenwert mit einem Zeitstempel versehen ist, der den Zeitpunkt der Vielzahl an Zeitpunkten repräsentiert. Mittels der Verarbeitungseinrichtung 11 werden die in der Datenbank 9 hinterlegten Betriebsdaten und Positionsdaten dann in der Analyseroutine derart verarbeitet, dass ein ortsreferenzierter Verschleißzustand des Arbeitsaggregats 5 der landwirtschaftlichen Ballenpresse für jeden Zeitpunkt der Vielzahl an Zeitpunkten bestimmt wird. Mit anderen Worten, mittels der Verarbeitungseinrichtung 11 wird ein Verschleißzustand des Arbeitsaggregats 5 weiterhin für jedem Zeitpunkt der Vielzahl an Zeitpunkten bestimmt, wobei der bestimmte Verschleißzustand für einem Zeitpunkt einen eindeutigen Bezug zu einem Ort bzw. einer Position der landwirtschaftlichen Ballenpresse 4 auf der landwirtschaftlichen Fläche 2 zu diesem Zeitpunkt, also eine eindeutige Ortsreferenz, umfasst.

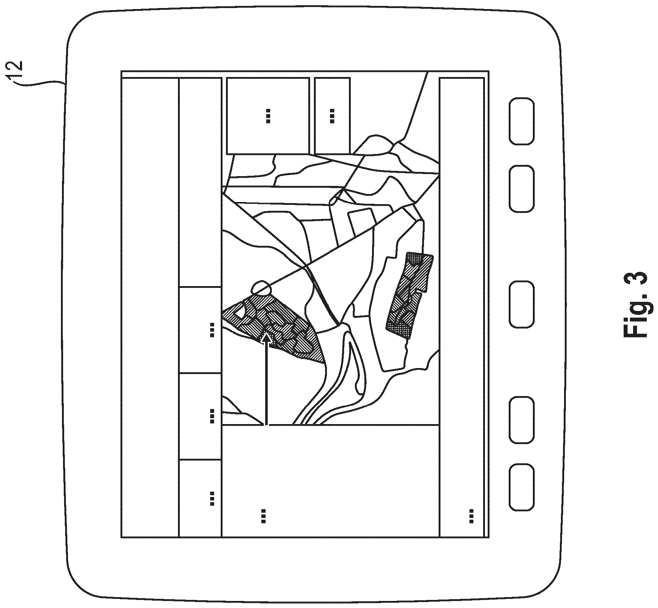

Neben der Anzeige bzw. Darstellung des bestimmten Verschleißzustands des Arbeitsaggregats 5 der landwirtschaftlichen Ballenpresse 4, der verschleißbedingt verursachten Kosten, einer Ursache für den Verschleiß, einer zukünftige Erntestrategie und/oder eines Wartungsintervalls kann auch der ortsreferenzierte Verschleißzustand des Arbeitsaggregats 5 der landwirtschaftlichen Ballenpresse 4 mittels der Anzeigeeinrichtung 12 dargestellt werden. Vorzugsweise wird dieser Verschleißzustand kartiert dargestellt bzw. angezeigt. Mit anderen Worten, mittels der Anzeigenrichtung 12 wird eine Karte der landwirtschaftlichen Fläche 2 dargestellt bzw. angezeigt, auf der die bestimmten Verschleißzustände des Arbeitsaggregats 5 der landwirtschaftlichen Ballenpresse 4 jeweils einem Flächenbereich der landwirtschaftlichen Fläche 2 zugeordnet sind. FIG. 3 zeigt eine solche mittels der Anzeigeeinrichtung 12 dargestellte Kartierung. Die in FIG. 3 mittels der Anzeigeeinrichtung 12 dargestellte Karte zeigt zwei landwirtschaftliche Flächen 2, wobei jede der beiden landwirtschaftlichen Flächen 2 in mehrere Flächenbereiche aufgeteilt ist, deren Begrenzungen durch feine Linien auf der Karte definiert sind. Die Schraffierung oder auch eine Farbgebung jedes Flächenbereichs gibt den bei der Bearbeitung dieses Flächenbereichs an dem Arbeitsaggregat 5 verursachten Verschleiß bzw. eine Änderung des Verschleißzustands, die durch die Bearbeitung dieses Flächenbereichs entstanden ist, wieder. Basierend hierauf, kann der Nutzer 13 unmittelbar den durchgeführten Arbeitsauftrag auf der entsprechenden landwirtschaftlichen Fläche 2 beurteilten. In an den Anzeigebereich der Karte angrenzenden Anzeigebereichen können weitere Informationen dargestellt werden, wie beispielsweise die zuvor erwähnten darstellbaren Informationen.

Die Verarbeitungseinrichtung 11, die Datenbank 9 und/oder die Anzeigeeinrichtung 12 können gemeinsam ein Verwaltungssystem 14 ausbilden. Ein solches Verwaltungssystem 14 kann einer Entität, beispielsweise einem Dienstleister, zugeordnet sein, die unabhängig von einer Person ist, beispielsweise einem Landwirt oder einem Lohnunternehmer, der die landwirtschaftliche Ballenpresse 4, die landwirtschaftliche Zugmaschine 3 und/oder die landwirtschaftliche Fläche 2, auf der der Arbeitsauftrag durchgeführt wird, zugeordnet ist. Eine Nutzung des Verwaltungssystems 14 zur Durchführung des Verfahrens kann dabei von der Entität, also dem Dienstleister, bei einer vorliegenden Berechtigung freigeschaltet werden. Insbesondere kann sich die Person die Nutzung des Verwaltungssystems 14 zur Durchführung des erfindungsgemäßen Verfahrens durch die Bezahlung einer Gebühr von dem Dienstleister freischalten lassen. Die Durchführung des erfindungsgemäßen Verfahrens wird dann als kostenpflichtige externe Dienstleistung angeboten, d.h. als eine As-a-Service-Funktionalität.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Landwirtschaftliches Gespann
- 2: Landwirtschaftliche Fläche
- 3: Landwirtschaftliche Zugmaschine
- 4: Landwirtschaftliche Ballenpresse
- 5: Arbeitsaggregat
- 5.1: Pick-up
- 5.2: Rotor
- 5.3: Schneidmesser
- 5.4: Raffer
- 5.5: Presskammer
- 5.6: Bindeeinrichtung
- 6: Erntegut
- 7: Sensoreinrichtung
- 8: Positionsbestimmungseinrichtung
- 9: Datenbank
- 10: Referenzdaten
- 11: Verarbeitungseinrichtung
- 12: Anzeigeeinrichtung
- 13: Nutzer
- 14: Verwaltungssystem

## Patentansprüche

1. Verfahren zum Bestimmen eines Verschleißzustands mindestens eines Arbeitsaggregats (5) einer landwirtschaftlichen Ballenpresse (4), die dazu ausgebildet ist, an eine landwirtschaftliche Zugmaschine (3) zur Bildung eines landwirtschaftlichen Gespanns (1) adaptiert zu werden, die folgenden Verfahrensschritte umfassend:
- Mittels mindestens einer Sensoreinrichtung (7), Ermitteln von Betriebsdaten der landwirtschaftlichen Ballenpresse zu einer Vielzahl an Zeitpunkten vor, während und/oder nach einer Durchführung eines Arbeitsauftrags auf einer landwirtschaftlichen Fläche (2) mittels der landwirtschaftlichen Ballenpresse (4),
**gekennzeichnet durch die Verfahrensschritte:**
- Übermitteln der ermittelten Betriebsdaten an eine Datenbank (9), wobei die Datenbank (9) mit der Sensoreinrichtung (7) zur Übertragung von Daten kommuniziert und die ermittelten Betriebsdaten in der Datenbank (9) hinterlegt werden;
- Mittels einer Verarbeitungseinrichtung (11), Bestimmen des Verschleißzustands des mindestens einen Arbeitsaggregats (5) der landwirtschaftlichen Ballenpresse (4) für jeden Zeitpunkt der Vielzahl an Zeitpunkten durch ein Verarbeiten der ermittelten Betriebsdaten in einer Analyseroutine, wobei die Verarbeitungseinrichtung (11) mit der Datenbank (9) zur Übertragung von Daten kommuniziert.

2. Verfahren nach Anspruch 1, **dadurch gekennzeichnet, dass,** mittels der Verarbeitungseinrichtung (11), mindestens eine Anweisung zur Durchführung des Arbeitsauftrags mittels der landwirtschaftlichen Ballenpresse (4) erzeugt wird, und zwar in Abhängigkeit des bestimmten Verschleißzustands des mindestens einen Arbeitsaggregats (5) der landwirtschaftlichen Ballenpresse (4).

3. Verfahren nach Anspruch 2, **dadurch gekennzeichnet, dass** die mindestens eine erzeugte Anweisung zur Durchführung des Arbeitsauftrags Folgendes umfasst:
- eine Vorschrift, die eine Ansteuerung der landwirtschaftlichen Ballenpresse (4) und/oder der landwirtschaftlichen Zugmaschine (3) zur Durchführung des Arbeitsauftrags definiert;
- eine Vorschrift, die das Beauftragen einer für eine Wartung der landwirtschaftlichen Ballenpresse (4) zuständigen Person zur Wartung des mindestens einen Arbeitsaggregats (5) der landwirtschaftlichen Ballenpresse (4) definiert; und/oder
- eine Vorschrift, die eine geänderte Route für das landwirtschaftliche Gespann (1) zur Anfahrt eines Ortes definiert, an dem die für die Wartung der landwirtschaftlichen Ballenpresse (4) zuständige Person die Wartung des mindestens einen Arbeitsaggregats (5) der landwirtschaftlichen Ballenpresse (4) durchführt.

4. Verfahren nach Anspruch 2 oder 3, **dadurch gekennzeichnet, dass** die mindestens eine erzeugte Anweisung mittels der Verarbeitungseinrichtung (11) automatisch und/oder von einem Nutzer (13) der landwirtschaftlichen Ballenpresse (4) ausgeführt wird.

5. Verfahren nach einem der Ansprüche 1 bis 4, **dadurch gekennzeichnet, dass,** mittels der Verarbeitungseinrichtung (11), in Abhängigkeit des bestimmten Verschleißzustands des mindestens einen Arbeitsaggregats (5) der landwirtschaftlichen Ballenpresse (4) bei der Durchführung des Arbeitsauftrags verschleißbedingt verursachte Kosten, eine Verschleißursache, eine zukünftige Erntestrategie für die landwirtschaftliche Fläche (2) und/oder ein Wartungsintervall des mindestens einen Arbeitsaggregats (5) der landwirtschaftlichen Ballenpresse (4) bestimmt werden.

6. Verfahren nach Anspruch 5, **dadurch gekennzeichnet, dass,** mittels der Verarbeitungseinrichtung (11), anhand eines zu einem Zeitpunkt unmittelbar vor der Durchführung des Arbeitsauftrags bestimmten Verschleißzustands des mindestens einen Arbeitsaggregats (5) der landwirtschaftlichen Ballenpresse (4) und eines zu einem Zeitpunkt unmittelbar nach der Durchführung des Arbeitsauftrags bestimmten Verschleißzustands des mindestens einen Arbeitsaggregats (5) der landwirtschaftlichen Ballenpresse (4) eine Verschleißkennzahl für das mindestens eine Arbeitsaggregat (5) der landwirtschaftlichen Ballenpresse (4) bestimmt wird.

7. Verfahren nach Anspruch 5 und 6, **dadurch gekennzeichnet, dass** anhand der Verschleißkennzahl die bei der Durchführung des Arbeitsauftrags verschleißbedingt verursachten Kosten und/oder das Wartungsintervall für das mindestens eine Arbeitsaggregat (5) der landwirtschaftlichen Ballenpresse (4) bestimmt werden.

8. Verfahren nach einem der Ansprüche 1 bis 7, **dadurch gekennzeichnet, dass** die Bestimmung des Verschleißzustands des mindestens einen Arbeitsaggregats (5) der landwirtschaftlichen Ballenpresse (4) unter Berücksichtigung von Referenzdaten (10) erfolgt.

9. Verfahren nach Anspruch 8, **dadurch gekennzeichnet, dass** die Referenzdaten (10) in der Datenbank hinterlegte Kennfelddaten des mindestens einen Arbeitsaggregats (5) der landwirtschaftlichen Ballenpresse (4) und/oder der landwirtschaftlichen Ballenpresse (4), historische Daten zu Verschleißzuständen des mindestens einen Arbeitsaggregats (5) der landwirtschaftlichen Ballenpresse (4), Geometriedaten des mindestens einen Arbeitsaggregats (5) der landwirtschaftlichen Ballenpresse (4) und/oder der landwirtschaftlichen Ballenpresse (4), Lastkollektive des mindestens einen Arbeitsaggregats (5) landwirtschaftlichen Ballenpresse (4) und/oder der landwirtschaftlichen Ballenpresse (4), Wetterdaten und/oder agronomische Daten der landwirtschaftlichen Fläche (2), insbesondere Bodendaten, Bestandsdaten, Ertragsdaten und/oder Flächendaten, umfassen.

10. Verfahren nach einem der Ansprüche 1 bis 9, **dadurch gekennzeichnet, dass,** mittels einer Positionsbestimmungseinrichtung (8), Positionsdaten der landwirtschaftlichen Ballenpresse (4) auf der landwirtschaftlichen Fläche (2) zu der Vielzahl an Zeitpunkten vor, während und/oder nach der Durchführung des Arbeitsauftrags ermittelt werden, wobei die Positionsdaten an die Datenbank (9), die mit der Positionsbestimmungseinrichtung (8) zur Übertragung von Daten kommuniziert, übermittelt werden, wobei die Betriebsdaten und die Positionsdaten einander zugeordnet in der Datenbank (9) hinterlegt werden, wobei, mittels der Verarbeitungseinrichtung (11), ein ortsreferenzierter Verschleißzustand des mindestens einen Arbeitsaggregats (5) der landwirtschaftlichen Ballenpresse (4) für jeden Zeitpunkt der Vielzahl an Zeitpunkten durch ein Verarbeiten der in der Datenbank (9) hinterlegten Betriebsdaten und Positionsdaten in der Analyseroutine bestimmt wird.

11. Verfahren einem der Ansprüche 1 bis 10, **dadurch gekennzeichnet, dass,** mittels einer mit der Verarbeitungseinrichtung (11) zur Übertragung von Daten kommunizierenden Anzeigeeinrichtung (12), der Verschleißzustand des mindestens einen Arbeitsaggregats (5) der landwirtschaftlichen Ballenpresse (4), die bei der Durchführung des Arbeitsauftrags verschleißbedingt verursachten Kosten, die Verschleißursache, die zukünftige Erntestrategie für die landwirtschaftliche Fläche (2) und/oder das Wartungsintervall des mindestens einen Arbeitsaggregats (5) der landwirtschaftlichen Ballenpresse (4) angezeigt wird.

12. Verfahren nach Anspruch 10 und 11, **dadurch gekennzeichnet, dass,** mittels der Anzeigeeinrichtung (12), der ortsreferenzierte Verschleißzustand des mindestens einen Arbeitsaggregats (5) der landwirtschaftlichen Ballenpresse (4) kartiert angezeigt wird.

13. Verfahren nach einem der Ansprüche 1 bis 12, **dadurch gekennzeichnet, dass** die Datenbank (9), die Verarbeitungseinrichtung (11) und/oder die Anzeigeeinrichtung (12) ein Verwaltungssystem (14) ausbilden.

14. Verfahren nach Anspruch 13, **dadurch gekennzeichnet, dass** das Verwaltungssystem (14) einer Entität zugeordnet ist, die unabhängig von einer Person ist, welcher die landwirtschaftliche Ballenpresse (4), die landwirtschaftliche Zugmaschine (3) und/oder die landwirtschaftliche Fläche (2), auf welcher der Arbeitsauftrag durchgeführt wird, zugeordnet ist, wobei eine Nutzung des Verwaltungssystems (14) zur Durchführung der Verfahrensschritte von der Entität bei einer vorliegenden Berechtigung freigeschaltet wird.

15. Landwirtschaftliche Ballenpresse (4) zur Verwendung in einem Verfahren nach einem der Ansprüche 1 bis 14.

16. Landwirtschaftliches Gespann (1) aus einer landwirtschaftlichen Zugmaschine (3), vorzugsweise einem Traktor, und einer an die landwirtschaftliche Zugmaschine (3) adaptierten landwirtschaftlichen Ballenpresse (4), **dadurch gekennzeichnet, dass** die landwirtschaftliche Ballenpresse (4) nach Anspruch 15 ausgebildet ist.
